# EUROPÄISCHE PATENTSCHRIFT

(11) **EP 2 751 538 B1**
(45) Veröffentlichungstag und Bekanntmachung des Hinweises auf die Patenterteilung: **12.10.2016**
(21) Anmeldenummer: 12730986.2
(22) Anmeldetag: 03.07.2012
(51) Int. Cl.: G01L 13/02, B01L 3/00

(54) **POLYMERSCHICHTSYSTEM-DRUCKSENSORVORRICHTUNG UND POLYMERSCHICHTSYSTEM-DRUCKSENSORVERFAHREN**
PRESSURE SENSOR BUILT FROM POLYMER LAYERS AND ITS USE
CAPTEUR DE PRESSION AYANT DES COUCHES POLYMÈRES & xA;ET SON UTILISATION

(30) Priorität: 31.08.2011 DE 102011081887
(43) Veröffentlichungstag der Anmeldung: 09.07.2014
(73) Patentinhaber: Robert Bosch GmbH, 70442 Stuttgart (DE)
(72) Erfinder: BRETTSCHNEIDER, Thomas, 70806 Kornwestheim (DE); DORRER, Christian, 70193 Stuttgart (DE)
(86) Internationale Anmeldenummer: PCT/EP2012/062874
(87) Internationale Veröffentlichungsnummer: WO 2013/029836

(56) Entgegenhaltungen:
- WO-A2-2007/029132
- DE-A1-102008 002 336
- ANTONY ORTH ET AL: "Elastomer Membrane Pressure Sensors for Microfluidics", MICRO TAS JOURNAL, 7. Oktober 2010 (2010-10-07), Seiten 1994-1996, XP002682483, 14th International Conference on miniaturized systems for Chemistry and Life sciences , Groniningen, NL

## Beschreibung

Die Erfindung betrifft eine Polymerschichtsystem-Drucksensorvorrichtung und ein Polymerschichtsystem-Drucksensorverfahren.

### Stand der Technik

Obwohl auch beliebige mikromechanische Bauelemente anwendbar sind, werden die vorliegende Erfindung und die ihr zugrundeliegende Problematik anhand von integrierten mikrofluidischen Bauteilen erläutert.

Integrierte mikrofluidische Bauteile, z.B. Lab-on-a-Chip-Systeme in der Medizintechnik, bestehen häufig aus einem polymeren Schichtaufbau mit eingeschlossenen mikrofluidischen Strukturen, wie z.B. Kanälen und Kammern.

Mikrofluidische Bauteile auf Basis von polymeren Schichtsystemen sind aufgrund der flexiblen Bearbeitungs- und Verbindungstechnologien vielseitig einsetzbar und dank geringer Kosten eine sehr gute Plattform zur Realisierung von Einweg-Bauteilen. Zur Erhöhung der Kontrolle von Vorgängen in komplexen mikrofluidischen Systemen sind grundlegende Informationen über den physikalischen Zustand der Fluide in derartigen Systemen unerlässlich. Neben der Temperatur sind vor allem die Drücke in mikrofluidischen Kavitäten bzw. Kanälen von Bedeutung, um genaue Flussraten einstellen zu können, die Verstopfung eines Kanals feststellen zu können und die Funktion von Ventilen oder Pumpen zu überwachen.

Die DE 10 2009 000 529 A1 beschreibt ein System zur Druckmessung mit einem einseitig offenen Messkanal, wobei am offenen Ende eine Verbindung zur Flüssigkeit besteht und am geschlossenen Ende ein Gas eingeschlossen ist. Bei Erhöhung des Drucks wird das Gas komprimiert und die Gas-Flüssigkeit-Grenzfläche verschoben. Durch Beobachtung des Meniskus lässt sich die Volumenänderung ermitteln und bei bekanntem Anfangsdruck über das Boyle-Marriottsche Gesetz der aktuelle Druck ermitteln. Zur Detektion der Position des Meniskus wird ein Verfahren vorgeschlagen, welches die Eigenschaften eines Lichtstrahls beurteilt, der mit Hilfe von Umlenkspiegeln den Bereich der zu erwartenden Position des Meniskus durchquert hat.

In Sensor Actuat. A - Frisch 118 (205), Seiten 212 bis 221 wird ein Drucksensor auf Siliziumbasis vorgestellt. Darin lenkt die Erhöhung des Drucks eine Siliziummembran aus, wobei die Auslenkung über die Reflexion eines Lichtstrahls ermittelt wird.

Micromachined Channel/Pressure Sensor Systems for Microflow Studies, J. Liu et al., 7th International Conference Solid-State Sensors and Actuators (Transducers '93) beschreibt einen mikrofluidischen Kanal auf Siliziumbasis mit angebundenen piezoresistiven Drucksensoren.

Aus der DE 10 2008 002 336 A1 ist ein Quetschventil in einem Verfahren zu dessen Herstellung bekannt, wobei das Quetschventil Anwendung in mikrofluidischen Systemen findet.

Das Dokument WO 2007/029132 offenbart einen mikrofluidischen Drucksensor mit einer durch einer auslenkbaren Membran begrenzte ? und einer Messung einer Kapazität zwischen zwei Elektroden, wobei eine Elektrode auf dem Membran angeordnet ist.

### Offenbarung der Erfindung

Die Erfindung schafft eine Polymerschichtsystem-Drucksensorvorrichtung nach Anspruch 1 und ein Polymerschichtsystem-Drucksensorverfahren nach Anspruch 11.

Bevorzugte Weiterbildungen sind Gegenstand der jeweiligen Unteransprüche.

### Vorteile der Erfindung

Der Kern der vorliegenden Erfindung ist ein Schichtaufbau bestehend aus einem Polymersubstrat mit mikrofluidischer Kavität, welche in einem Bereich durch eine flexible Polymermembran gedeckelt ist, wobei die Rückseite metallisiert wurde. In einem Abstand darüber befindet sich eine weitere Metallisierungsschicht, die mit einer darüberliegenden Polymermembran und einem darauf befindlichen Polymersubstrat verbunden ist. Zwischen den beiden Metallschichten befindet sich eine weitere Kavität, die durch einen nach außen geführten Kanal an einen Referenzdruck angeschlossen ist und mit einem Fluid, vorzugsweise einem Gas, gefüllt ist. Im einfachsten Fall ist der nach außen geführte Kanal mit der Umgebungsatmosphäre verbunden. Eine Druckdifferenz zwischen der mikrofluidischen Kavität im unteren Polymersubstrat und der Kavität zwischen den Metallschichten führt zu einer Deformation der metallisierten unteren Polymermembran, welche mit Hilfe der oberen Metallschicht kapazitiv oder im Fall eines Kontakts der beiden Metallschichten resistiv detektiert werden kann. Die Metallschichten werden vorzugsweise über seitlich ausgeführte Leiterbahnen kontaktiert.

Bei der erfindungsgemäßen Vorrichtung ist aufgrund der elektrischen Auswertung keine aufwendige externe Apparatur notwendig, um den Druck zu ermitteln, beispielsweise keine optische Auslesung. Dadurch lassen sich Kosten und Baugröße einer externen Steuer- und Ausleseeinheit deutlich reduzieren.

Die Erfindung ist zugeschnitten auf einen vielseitig für mikrofluidische Systeme einsetzbaren polymeren Schichtaufbau. Die Erfindung ermöglicht die Druckmessung direkt vor Ort. Dadurch wird vermieden, dass es durch den fluidischen Widerstand/die fluidische Kapazität eines andernfalls notwendigen Verbindungskanals bzw. Verbindungsschlauchs zum Drucksensor zu einer Verfälschung des Messsignals kommt.

Die Erfindung lässt sich mit zusätzlichen funktionalen Elementen koppeln. So kann man beispielsweise die metallisierte untere Polymermembran gleichzeitig als Ventil oder aktives Element einer Membranpumpe nutzen und damit direkt die Ventil- bzw. Pumpfunktion überwachen.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
- Fig. 1a)-c): schematische Ansichten zur Erläuterung einer Polymerschicht-Drucksensorvorrichtung gemäß einer ersten Ausführungsform der vorliegenden Erfindung, und zwar Fig. 1a) in Draufsicht und Fig. 1b) und 1c) im Querschnitt entlang der Linie A-A' in Fig. 1a);
- Fig. 2a),b): schematische Ansichten zur Erläuterung einer Polymerschicht-Drucksensorvorrichtung gemäß einer zweiten Ausführungsform der vorliegenden Erfindung, und zwar Fig. 2a) im Querschnitt entlang der Linie A-A' in Fig. 1a) und Fig. 2b) eine Darstellung der strukturierten oberen Membranmetallisierungsschicht 7a in Fig. 2a);
- Fig. 3: eine schematische Aufsicht einer strukturierten unteren Membranmetallisierungsschicht 6a zur Erläuterung einer Polymerschicht-Drucksensorvorrichtung gemäß einer dritten Ausführungsform der vorliegenden Erfindung; und
- Fig. 4: eine schematische Querschnittsansicht zur Erläuterung einer Polymerschicht-Drucksensorvorrichtung gemäß einer vierten Ausführungsform, der vorliegenden Erfindung.

### Ausführungsformen der Erfindung

In den Figuren bezeichnen gleiche Bezugszeichen gleiche bzw. funktionsgleiche Elemente.

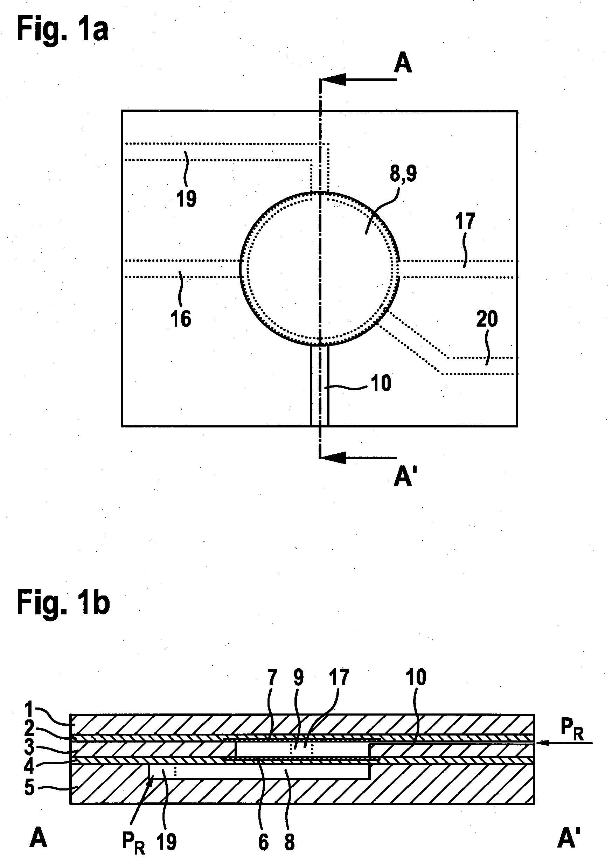

Fig. 1a)-c) sind schematische Ansichten zur Erläuterung einer Polymerschicht-Drucksensorvorrichtung gemäß einer ersten Ausführungsform der vorliegenden Erfindung, und zwar Fig. 1a) in Draufsicht und Fig. 1b) und 1c) im Querschnitt entlang der Linie A-A' in Fig. 1a).

In Fig. 1a) bis 1c) bezeichnet Bezugszeichen 5 ein erstes Polymersubstrat mit einer ersten Kavität 8. Auf dem ersten Polymersubstrat 5 und der ersten Kavität 8 vorgesehen ist eine elastische erste Polymermembran 4, welche über die erste Kavität 8 gespannt ist und in Abhängigkeit von einem in der ersten Kavität 8 anliegenden Druck P_{M} auslenkbar ist.

Auf der ersten Polymermembran 4 oberhalb und außerhalb der ersten Kavität 8 vorgesehen ist eine erste Membranmetallisierungsschicht 6, welche zusammen mit der ersten Polymermembran 4 in Abhängigkeit von dem in der ersten Kavität 8 anliegenden Druck P_{M} auslenkbar ist.

Über der ersten Polymermembran 4 ist ein zweites Polymersubstrat 3 mit einer zweiten Kavität 9 angeordnet, wobei die zweite Kavität 9 über der ersten Kavität 8 angeordnet ist und wobei eine zweite Polymermembran 2 über die zweite Kavität 9 gespannt ist. Auf der zweiten Polymermembran 2 innerhalb der zweiten Kavität 9 angebracht ist eine zweite Membranmetallisierungsschicht 7.

Schließlich ist ein drittes Polymersubstrat 1 auf der zweiten Polymermembran 2 angeordnet und bildet gleichsam einen oberen Deckel der Drucksensorvorrichtung.

Wie aus Fig. 1a) ersichtlich, ist die erste Membranmetallisierungsschicht 6 über eine erste Leiterbahn 16 seitlich der Kavitäten 8, 9 anschließbar und ist die zweite Membranmetallisierungsschicht 7 über eine zweite Leiterbahn 17 seitlich der Kavitäten 8, 9 anschließbar.

Die erste Kavität 8 ist an einem ersten und einem zweiten Druckkanal 19, 20 angeschlossen, welche im ersten Pölymersubstrat 5 verlaufen.

Die zweite Kavität 9 ist an einen dritten Druckkanal 10 angeschlossen, welcher im zweiten Polymersubstrat 3 verläuft und welcher üblicherweise an einen Referenzdruck P_{R} angeschlossen wird, im einfachsten Fall Atmosphärendruck.

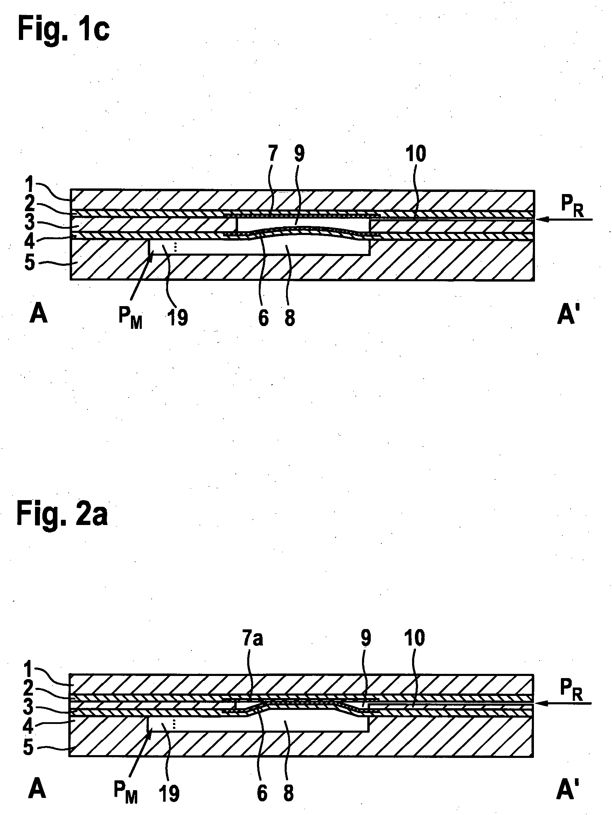

Im Zustand gemäß Fig. 1b) liegt am Druckkanal 19 und 20 derselbe Referenzdruck P_{R} an wie am dritten Druckkanal 10, sodass die erste Polymermembran 4 mit der darauf befindlichen ersten Membranmetallisierungsschicht 6 sich in unausgelenktem Zustand befindet. Eine Druckdifferenz ΔP = P_{M} - P_{R} führt, wie in Fig. 1c) angedeutet, zur Auslenkung der unteren Polymermembran 4 mit der darauf befindlichen ersten Membranmetallisierungsschicht 6. Die Druckdifferenz ΔP kann beispielsweise durch eine Messung der Kapazität zwischen den Membranmetallisierungsschichten 6, 7 bestimmt werden. Alternativ dazu kann die Höhe der zweiten Kavität 9 derart ausgelegt werden, dass es bei einer entsprechenden Druckdifferenz ΔP zu einer Berührung der Membranmetallisierungsschichten 6, 7 kommt, wobei sich eine Kontaktfläche mit zunehmender Druckdifferenz ΔP vergrößert. Der Druck wird dann zweckmäßigerweise aus dem elektrischen Widerstand zwischen der ersten und zweiten Membranmetallisierungsschicht 6, 7 bestimmt.

In diesem Fall kann es zweckmäßig sein, ein Metall oder ein anderes Material, z.B. ein leitfähiges Polymer, eine leitfähige Paste oder Kohlenstoff-Nanoröhren (CNTs), z.B. mit einem hohen spezifischen Widerstand, zu verwenden, um die Anforderungen an die Auswertelektronik zu senken. Im Ausführungsbeispiel nach Fig. 1a) bis 1c) erfolgt die Metallisierung in beiden Kavitäten 8, 9 vollflächig.

Die nötigen Strukturen in den Polymersubstraten 1, 3, 5 können beispielsweise durch Fräsen, Spritzguss oder Heißprägen erzeugt werden. Das Fügen des polymeren Schichtaufbaus kann beispielsweise mittels Laserdurchstrahlschweißen, Ultraschallschweißen oder Klebetechniken erfolgen. Die Metallisierung kann beispielsweise durch Sputtern, Inkjet-Printing oder laserbasierten Metallisierungstechnologien erfolgen.

Als Polymersubstrat eignen sich beispielsweise Thermoplaste, z.B. PC, PP, PE, PMMA, COP, COC usw. Als elastische Membran eignet sich Elastomer, thermoelastisches Elastomer, Thermoplaste usw. Die Metallisierung der Membranmetallisierungsschichten 6, 7 kann durch Metalle, wie z.B. Gold, Kupfer, Aluminium usw. erfolgen. Zur Erhöhung des spezifischen Widerstands können bedarfsweise jedoch auch andere Materialien, wie z.B. leitfähiges Polymer oder CNTs verwendet werden.

Beispielhafte Abmessungen beim Ausführungsbeispiel gemäß Fig. 1a) bis 1c) sind 0,5 bis 3 mm Dicke des Polymersubstrats 1, 3, 5 (25 bis 300 µm Dicke der Polymermembranen 4, 2; 0,1 bis 20 µm Dicke der Membranmetallisierungsschichten 6, 7, 1 bis 1000 µm³ Volumen der Kavitäten 8, 9 sowie 10 x 10 bis 100 x 100 mm² als laterale Abmessungen des gesamten Ausführungsbeispiels).

In einer Auswertungsvariante wird lediglich die Information ausgenutzt, dass die beiden Membranmetallisierungsschichten 6, 7 in Kontakt kommen, also ein gewisser Mindestdruck überschritten ist. Das Ausführungsbeispiel kann in diesem Fall beispielsweise als Druckschalter funktionieren, um festzustellen, dass ein Fluid eine bestimmte Position im mikrofluidischen System erreicht hat. Vorteil dabei ist, dass die Anforderungen an die Genauigkeit der Herstellungen relaxiert sind und beispielsweise der Durchmesser der Kavitäten 8, 9 nicht sehr genau eingestellt werden muss.

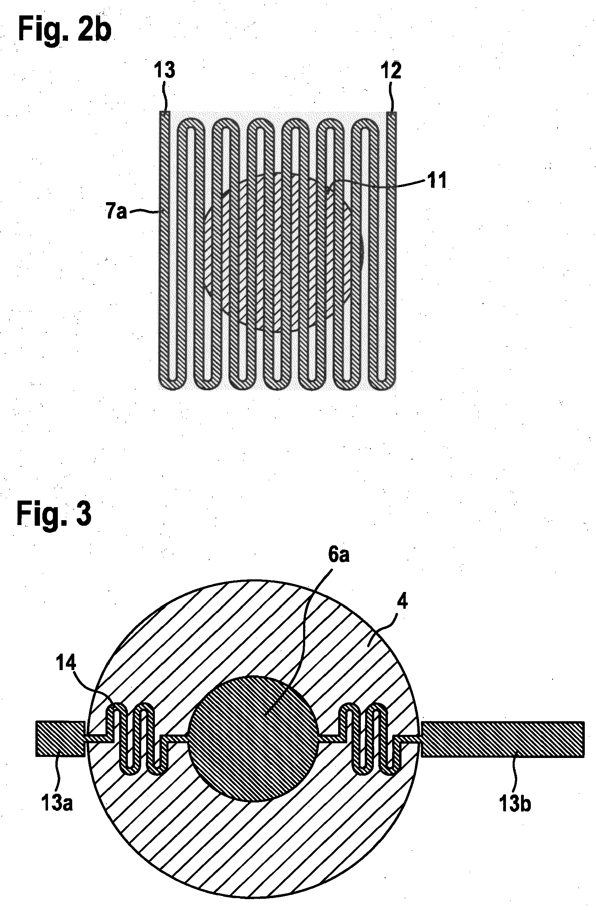

Fig. 2a),b) sind schematische Ansichten zur Erläuterung einer Polymerschicht-Drucksensorvorrichtung gemäß einer zweiten Ausführungsform der vorliegenden Erfindung, und zwar Fig. 2a) im Querschnitt entlang der Linie A-A' in Fig. 1a) und Fig. 2b) eine Darstellung der strukturierten oberen Membranmetallisierungsschicht 7a in Fig. 2a).

Bei der zweiten Ausführungsform gemäß Fig. 2a), b) ist das System derart ausgelegt, dass die untere Membranmetallisierungsschicht 6 bei Auslenkung nach oben mit der speziell strukturierten oberen Membranmetallisierungsschicht 7a in Kontakt kommt.

Wie aus Fig. 2b) ersichtlich, ist die obere Membranmetallisierungsschicht 7a mäanderförmig als Leiterbahn strukturiert und weist ein erstes und zweites Ende 12, 13 auf, zwischen welchen ein Widerstand erfassbar ist. Je nach Druckunterschied ΔP kommt es zu einem unterschiedlich großen Kontaktbereich 11 zwischen der unteren Membranmetallisierungsschicht 6 und der oberen strukturierten Membranmetallisierungsschicht 7a und damit zu unterschiedlich großen Kurzschlüssen in der oberen Membranmetallisierungsschicht 7a. So kann die Auslenkung der Polymermembran 6 über eine Widerstandsänderung zwischen den Enden 12, 13 der oberen strukturierten Membranmetallisierungsschicht 7a erfasst werden, was deutlich geringere Anforderungen an eine externe Auswerteelektronik stellt als eine kapazitive Auswertung.

Fig. 3 ist eine schematische Aufsicht einer strukturierten unteren Membranmetallisierungsschicht 6a zur Erläuterung einer Polymerschicht-Drucksensorvorrichtung gemäß einer dritten Ausführungsform der vorliegenden Erfindung.

Bei der dritten Ausführungsform gemäß Fig. 3 wird die untere Polymermembran 4 nicht vollflächig metallisiert, sondern ein zentraler Metallisierungsbereich 6a vorgesehen, der durch mindestens eine Entlastungsstruktur 14 an periphere Metallisierungsbereiche 13a, 13b elastisch angebunden ist. In Fig. 3 ist der freischwebende Bereich der ersten Polymermembran 4 straffiert dargestellt. Der Vorteil dieser dritten Ausführungsform besteht darin, dass durch einen Verzicht auf die vollflächige Metallisierung der ersten Polymermembran 4 eine Erhöhung der Flexibilität der ersten Polymermembran 4 erzielt wird und kleinere Druckdifferenzen detektiert werden können. Im Vergleich zu einer gradlinigen Anbindung der Membranmetallisierung 6a wird die Empfindlichkeit durch die Entlastungsstrukturen 14 zusätzlich erhöht, da sich diese leichter dehnen und stauchen lassen. Zusätzlich ergeben sich durch die Geometrie der Entlastungsstrukturen 14 Rückstellkräfte, sodass im Fall einer Auslenkung nach oben keine feste Verbindung zwischen der ersten Polymermembran 4 und der Metallisierung 6a nötig ist.

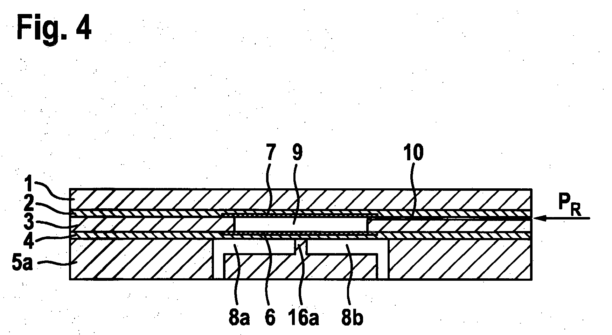

Fig. 4 ist eine schematische Querschnittsansicht zur Erläuterung einer Polymerschicht-Drucksensorvorrichtung gemäß einer vierten Ausführungsform der vorliegenden Erfindung.

Das Ausführungsbeispiel gemäß Fig. 4 zeigt eine Kombination der erfindungsgemäßen Polymerschichtsystem-Drucksensorvorrichtung nach Fig. 1a) bis c) mit einem aus der DE 10 2008 002 336 A1 an sich bekannten Quetschventil.

Bei dieser Ausführungsform weist das erste Polymersubstrat 5a zwei Teilkavitäten 8a, 8b auf, welche durch einen Steg 16a getrennt sind, über den die erste Polymermembran 4 mit der ersten Membranmetallisierungsschicht 6 gespannt ist. Durch diesen Aufbau lässt sich die Funktion des Quetschventils mit einer elektrischen Auswertung in Echtzeit überwachen und so Fehlfunktionen, wie z.B. Verstopfung, frühzeitig erkennen. Der Druckkanal 10 kann in diesem Fall beispielsweise dazu benutzt werden, das Quetschventil über einen externen Druck P_{R} zu steuern.

Auf analoger Weise kann auch der Verdrängungskanal einer Membranpumpe nach dem gezeigten erfindungsgemäßen Prinzip ausgestattet werden. Zusätzlich zur reinen Funktionskontrolle kann in diesem Falle aus der Auslenkung der ersten Polymermembran auch die Pumprate in Echtzeit überwacht und bestimmt werden.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuterten Beispiele beschränkt.

## Patentansprüche

1. Polymerschichtsystem-Drucksensorvorrichtung mit:
einem ersten Polymersubstrat (5; 5a) mit einer ersten Kavität (8; 8a, 8b);
einer ersten Polymermembran (4), welche über die erste Kavität (8; 8a, 8b) gespannt ist und in Abhängigkeit von dem in der ersten Kavität (8; 8a, 8b) anliegenden Druck (P_{M}) auslenkbar ist;
einer auf der ersten Polymermembran (4) oberhalb der ersten Kavität (8; 8a) angebrachten ersten Membranmetallisierungsschicht (6; 6a), welche zusammen mit der ersten Polymermembran (4) in Abhängigkeit von einem in der ersten Kavität (8; 8a, 8b) anliegenden Druck (P_{M}) auslenkbar ist;
einem über der ersten Polymermembran (4) angeordneten zweiten Polymersubstrat (3) mit einer zweiten Kavität (9), welche über der ersten Kavität (8; 8a, 8b) angeordnet ist;
einer zweiten Polymermembran (2), welche über die zweite Kavität (9) gespannt ist;
einer auf der zweiten Polymermembran (2) innerhalb der zweiten Kavität (9) angebrachten zweiten Membranmetallisierungsschicht (7; 7a); und
einem über der zweiten Polymermembran (2) angeordneten dritten Polymersubstrat (1).

2. Polymerschichtsystem-Drucksensorvorrichtung nach Anspruch 1, wobei die zweite Polymermembran (7) nicht auslenkbar ist.

3. Polymerschichtsystem-Drucksensorvorrichtung nach Anspruch 1 oder 2, wobei die erste Kavität (8; 8a, 8b) an einen ersten und einen zweiten Druckkanal (19, 20) angeschlossen ist, welche im ersten Polymersubstrat (5) verlaufen.

4. Polymerschichtsystem-Drucksensorvorrichtung nach Anspruch 1, 2 oder 3, wobei die zweite Kavität (9) an einen dritten Druckkanal (10) angeschlossen ist, welcher im zweiten Polymersubstrat (3) verläuft.

5. Polymerschichtsystem-Drucksensorvorrichtung nach einem der vorhergehenden Ansprüche, wobei die erste Membranmetallisierungsschicht (6; 6a) und die zweite Membranmetallisierungsschicht (7; 7a) jeweils über mindestens eine Leiterbahn (16; 17; 13a, 13b) seitlich der zweiten Kavität (9) anschließbar sind.

6. Polymerschichtsystem-Drucksensorvorrichtung nach einem der vorhergehenden Ansprüche, wobei die erste Membranmetallisierungsschicht (6; 6a) und die zweite Membranmetallisierungsschicht (7; 7a) bei Druckauslenkung miteinander in Berührung kommen können.

7. Polymerschichtsystem-Drucksensorvorrichtung nach Anspruch 6, wobei die erste Membranmetallisierungsschicht (6; 6a) einen teilflächigen zentralen Metallisierungsbereich (6a) auf der ersten Polymermembran (4) aufweist, der über Entlastungselemente (14) in der Membranmetallisierungsschicht aufgehängt ist.

8. Polymerschichtsystem-Drucksensorvorrichtung nach Anspruch 6, wobei die zweite Membranmetallisierungsschicht (7; 7a) leiterbahnförmig strukturiert ist, so dass bei Berührung infolge Druckauslenkung ein Widerstand zwischen zwei Enden (12, 13) der zweite Membranmetallisierungsschicht (7; 7a) abhängig vom in der ersten Kavität (8; 8a, 8b) anliegenden Druck (P_{M}) ist.

9. Polymerschichtsystem-Drucksensorvorrichtung nach Anspruch 1, wobei die erste Kavität (8a, 8b) eine erste Teilkavität (8a) und eine zweite Teilkavität (8b) aufweist, welche durch einen Steg (16) getrennt sind, über den die erste Polymermembran (4) gespannt ist.

10. Polymerschichtsystem-Drucksensorverfahren unter Verwendung einer Polymerschichtsystem-Drucksensorvorrichtung nach Anspruch 1, wobei der in der ersten Kavität (8; 8a, 8b) anliegende Druck (P_{M}) anhand der Kapazität zwischen der ersten Membranmetallisierungsschicht (6; 6a) und der zweiten Membranmetallisierungsschicht (7; 7a) erfasst wird.

11. Polymerschichtsystem-Drucksensorverfahren unter Verwendung einer Polymerschichtsystem-Drucksensorvorrichtung nach Anspruch 6, wobei der in der ersten Kavität (8; 8a, 8b) anliegende Druck (P_{M}) anhand des Widerstandes der zweiten Membranmetallisierungsschicht (7; 7a) erfasst wird.

## Claims

1. Polymer layer system pressure sensor device comprising:
a first polymer substrate (5; 5a) with a first cavity (8; 8a, 8b);
a first polymer membrane (4), which is stretched over the first cavity (8; 8a, 8b) and can be deflected in dependence on the pressure (P_{M}) in the first cavity (8; 8a, 8b);
a first membrane metallization layer (6; 6a), which is attached on the first polymer membrane (4), above the first cavity (8; 8a), and together with the first polymer membrane (4) can be deflected in dependence on a pressure (P_{M}) in the first cavity (8; 8a, 8b);
a second polymer substrate (3), which is arranged over the first polymer membrane (4) and has a second cavity (9), which is arranged over the first cavity (8; 8a, 8b);
a second polymer membrane (2), which is stretched over the second cavity (9);
a second membrane metallization layer (7, 7a), which is attached on the second polymer membrane (2), within the second cavity (9); and
a third polymer substrate (1), which is arranged over the second polymer membrane (2).

2. Polymer layer system pressure sensor device according to Claim 1, the second polymer membrane (7) not being deflectable.

3. Polymer layer system pressure sensor device according to Claim 1 or 2, the first cavity (8; 8a, 8b) being connected to a first and a second pressure channel (19, 24), which run in the first polymer substrate (5).

4. Polymer layer system pressure sensor device according to Claim 1, 2 or 3, the second cavity (9) being connected to a third pressure channel (10), which runs in the second polymer substrate (3).

5. Polymer layer system pressure sensor device according to one of the preceding claims, the first membrane metallization layer (6; 6a) and the second membrane metallization layer (7, 7a) being respectively connectable by way of at least one conductor track (16; 17; 13a, 13b) to the side of the second cavity (9).

6. Polymer layer system pressure sensor device according to one of the preceding claims, the first membrane metallization layer (6; 6a) and the second membrane metallization layer (7; 7a) being able to come into contact with one another when there is deflection under pressure.

7. Polymer layer system pressure sensor device according to Claim 6, the first membrane metallization layer (6; 6a) having a part-area central metallization region (6a) on the first polymer membrane (4), which is suspended in the membrane metallization layer by way of relieving elements (14).

8. Polymer layer system pressure sensor device according to Claim 6, the second membrane metallization layer (7; 7a) being structured in the form of a conductor track, so that, when there is contact as a result of deflection under pressure, a resistance between two ends (12, 13) of the second membrane metallization layer (7; 7a) is dependent on the pressure (P_{M}) in the first cavity (8; 8a, 8b).

9. Polymer layer system pressure sensor device according to Claim 1, the first cavity (8a, 8b) having a first part-cavity (8a) and a second part-cavity (8b), which are separated by a web (16), over which the first polymer membrane (4) is stretched.

10. Polymer layer system pressure sensor method using a polymer layer system pressure sensor device according to Claim 1, the pressure (P_{M}) in the first cavity (8; 8a, 8b) being sensed on the basis of the capacitance between the first membrane metallization layer (6; 6a) and the second membrane metallization layer (7; 7a).

11. Polymer layer system pressure sensor method using a polymer layer system pressure sensor device according to Claim 6, the pressure (P_{M}) in the first cavity (8; 8a, 8b) being sensed on the basis of the resistance of the second membrane metallization layer (7; 7a).

## Revendications

1. Dispositif de capteur de pression à système de couches polymères comportant :
un premier substrat polymère (5 ; 5a) avec une première cavité (8 ; 8a ; 8b) ;
une première membrane polymère (4), qui est tendue sur la première cavité (8 ; 8a, 8b) et peut être déviée en fonction de la pression (P_{M}) présente dans la première cavité (8 ; 8a, 8b) ;
une première couche de métallisation de membrane (6 ; 6a) appliquée sur la première membrane polymère (4) au-dessus de la première cavité (8 ; 8a), qui peut être déviée conjointement avec la première membrane polymère (4) en fonction d'une pression (P_{M}) présente dans la première cavité (8 ; 8a, 8b) ;
un deuxième substrat polymère (3) disposé sur la première membrane polymère (4) avec une deuxième cavité (9), qui est disposée sur la première cavité (8 ; 8a, 8b) ;
une deuxième membrane polymère (2), qui est tendue sur la deuxième cavité (9) ;
une deuxième couche de métallisation de membrane (7 ; 7a) montée sur la deuxième membrane polymère (2) à l'intérieur de la deuxième cavité (9) ; et
un troisième substrat polymère (1) disposé sur la deuxième membrane polymère (2).

2. Dispositif de capteur de pression à système de couches polymères selon la revendication 1, dans lequel la deuxième membrane polymère (7) ne peut pas être déviée.

3. Dispositif de capteur de pression à système de couches polymères selon la revendication 1 ou 2, dans lequel la première cavité (8 ; 8a, 8b) se rattache à un premier et un deuxième canal de pression (19, 20), qui s'étendent dans le premier substrat polymère (5).

4. Dispositif de capteur de pression à système de couches polymères selon la revendication 1, 2 ou 3, dans lequel la deuxième cavité (9) se rattache à un troisième canal de pression (10), qui s'étend dans le deuxième substrat polymère (3).

5. Dispositif de capteur de pression à système de couches polymères selon une des revendications précédentes, dans lequel la première couche de métallisation de membrane (6 ; 6a) et la deuxième couche de métallisation de membrane (7 ; 7a) peuvent être rattachées respectivement par l'intermédiaire d'au moins une piste conductrice (16 ; 17 ; 13a, 13b) latéralement à la deuxième cavité (9).

6. Dispositif de capteur de pression à système de couches polymères selon une des revendications précédentes, dans lequel la première couche de métallisation de membrane (6 ; 6a) et la deuxième couche de métallisation de membrane (7 ; 7a) peuvent venir en contact l'une avec l'autre en cas de déviation sous pression.

7. Dispositif de capteur de pression à système de couches polymères selon la revendication 6, dans lequel la première couche de métallisation de membrane (6 ; 6a) présente une zone de métallisation centrale à surface partielle (6a) sur la première membrane polymère (4), qui est suspendue par l'intermédiaire d'éléments de délestage (14) dans la couche de métallisation de membrane.

8. Dispositif de capteur de pression à système de couches polymères selon la revendication 6, dans lequel la deuxième couche de métallisation de membrane (7 ; 7a) est structurée en forme de piste conductrice, de sorte qu'en cas de contact consécutivement à une déviation sous pression, une résistance entre deux extrémités (12, 13) de la deuxième couche de métallisation de membrane (7 ; 7a) dépende de la pression (P_{M}) présente dans la première cavité (8 ; 8a, 8b).

9. Dispositif de capteur de pression à système de couches polymères selon la revendication 1, dans lequel la première cavité (8a, 8b) présente une première cavité partielle (8a) et une deuxième cavité partielle (8b), qui sont séparées par un gradin (16), par l'intermédiaire duquel la première membrane polymère (4) est tendue.

10. Procédé de détection de pression à système de couches polymères utilisant un dispositif de capteur de pression à système de couches polymères selon la revendication 1, dans lequel la pression (P_{M}) présente dans la première cavité (8 ; 8a, 8b) est détectée sur la base de la capacité entre la première couche de métallisation de membrane (6 ; 6a) et la deuxième couche de métallisation de membrane (7 ; 7a).

11. Procédé de détection de pression à système de couches polymères utilisant un dispositif de capteur de pression à système de couches polymères selon la revendication 6, dans lequel la pression (P_{M}) présente dans la première cavité (8 ; 8a, 8b) est détectée sur la base de la résistance de la deuxième couche de métallisation de membrane (7 ; 7a).
